Europäisches Patentamt

European Patent Office

Office européen des brevets

(19)

(11) Veröffentlichungsnummer: **0 186 101**

**A1**

(12) **EUROPÄISCHE PATENTANMELDUNG**

(21) Anmeldenummer: 85116089.5

(22) Anmeldetag: 17.12.85

(51) Int. Cl.⁴: **B 24 D 7/18**
**B 23 F 21/02**

(30) Priorität: 22.12.84 DE 3447124

(43) Veröffentlichungstag der Anmeldung:
02.07.86 Patentblatt 86/27

(84) Benannte Vertragsstaaten:
DE FR GB IT

(71) Anmelder: Carl Hurth Maschinen- und Zahnradfabrik
GmbH & Co
Moosacher Strasse 36
D-8000 München 40(DE)

(72) Erfinder: Erhardt, Manfred
Rainerstrasse 9e
D-8031 Puchheim(DE)

(72) Erfinder: Schäferling, Karl-Josef
Heinrich-Scherer-Strasse 6
D-8880 Dillingen(DE)

(72) Erfinder: Loos, Herbert
Ludwig-Anzengruber-Strasse 3
D-8250 Dorfen-Stadt 1(DE)

(72) Erfinder: Buschmeier, Dieter
Schrannerstrasse 14
D-8011 Kirchheim(DE)

(54) Abrasives Werkzeug zum Feinbearbeiten der Zahnflanken von insbesondere gehärteten Zahnrädern.

(57) Für zahnradartige und ähnliche abrasive Werkzeuge, insbesondere solche auf CBN-Basis, zum Feinbearbeiten der Zahnflanken von insbesondere gehärteten Zahnrädern wird vorgeschlagen, die Zahnflanken mit einer Verschleißschutzschicht, z. B. aus TiN, zu überziehen. Damit kann die Standzeit der Werkzeuge erhöht werden.

Fig.3

EP 0 186 101 A1

**Abrasives Werkzeug zum Feinbearbeiten der
Zahnflanken von insbesondere gehärteten
Zahnrädern**

Die Erfindung betrifft ein Werkzeug nach dem Oberbegriff
des Hauptanspruchs. Ausgangspunkt ist damit der Stand
der Technik, wie er u.a. von der DE-PS 33 36 593 oder
der DE-OS 32 02 695 bekannt ist. In beiden Fällen handelt es sich um mit Körnern eines superharten Werkstoffes beschichtete Werkzeuge. Die Körner können aber auch
in einen Matrixwerkstoff eingebettet sein.

Werkzeuge der genannten Art haben sich beim Feinbearbeiten der Zahnflanken von insbesondere gehärteten Zahnrädern bewährt. Als abrasiver, d.h. spanabhebender Bestandteil wird dabei immer häufiger kubisch kristallines
Bornitrid (CBN) verwendet. Gegenüber konventionellen
Schleifmitteln auf oxydischer Basis, z.B. Korund ($Al_2O_3$), oder auf Karbidbasis, z.B. Siliziumkarbid (SiC)
bieten CBN-Werkzeuge wesentlich höhere Abtragsleistungen
und längere Standzeiten. Auch gegenüber Diamantwerkzeugen bieten CBN-Werkzeuge beim Bearbeiten von gehärteten
Stahlteilen längere Standzeiten. Der Grund dafür wird
in einer chemisch-thermischen Reaktion im Diamant auf
Grund der hohen Temperaturen an der Wirkstelle vermutet. Trotz der gegenüber anderen Schleifmitteln längeren Standzeit wird diese mitunter noch als zu gering
angesehen, z.B. bei der sogenannten mannlosen Schicht.
Bei der Feinbearbeitung von Zahnflanken ist es - im
Gegensatz etwa zum Schleifen von zylinderischen Teilen
- i.a. nicht möglich, innerhalb einer Maschinenkette
laufend das Zahnweitenmaß und die Flankenform zu messen
und das Werkzeug noch vor dem Unterschreiten einer festgelegten Toleranzgrenze nachzustellen. Die Zahnrad-Feinbearbeitungswerkzeuge sollten deshalb so beschaffen sein, daß sie während einer Arbeitsschicht nicht gewechselt werden müssen.

Die der Erfindung zugrundliegende Aufgabe ist deshalb ein Werkzeug der eingangs geschilderten Art so zu verbessern, daß seine Standzeit zwischen zwei Abrichtvorgängen noch weiter erhöht wird.

Erfindungsgemäß wird das dadurch erreicht, daß man auf das fertige Werkzeug eine Verschleißschutzschicht aufbringt, die auch die an der Oberfläche befindlichen CBN-Körner bedeckt. Als Verschleißschutzschicht hat sich Titannitrid (TiN) bewährt, das auch bei stählernen Werkzeugen mit ausgeprägten Schneiden angewendet wird. Eine einfache Art, die Verschleißschutzschicht aufzubringen, ist das Aufdampfen.

Die nur wenige $\mu$m dicke Verschleißschutzschicht schützt die CBN- oder ähnlichen Körner bzw. deren Kanten, Ecken und Spitzen vor zu rascher Abnutzung aufgrund mechanischer, thermischer oder chemischer Einflüsse.

Die Erfindung wird nachstehend anhand eines Ausführungsbeispiels beschrieben, das in 6 Figuren dargestellt ist. Dabei zeigt

Figur 1 ein zahnradartiges Werkzeug zusammen mit einem Werkstück,

Figur 2 einen Querschnitt durch einen Zahn des Werkzeugs in vergrößerter Darstellung,

Figuren 3 bis 6 je einen Längsschnitt (Ausschnitt) aus einem Werkzeug-Zahn in nochmals vergrößerter Darstellung.

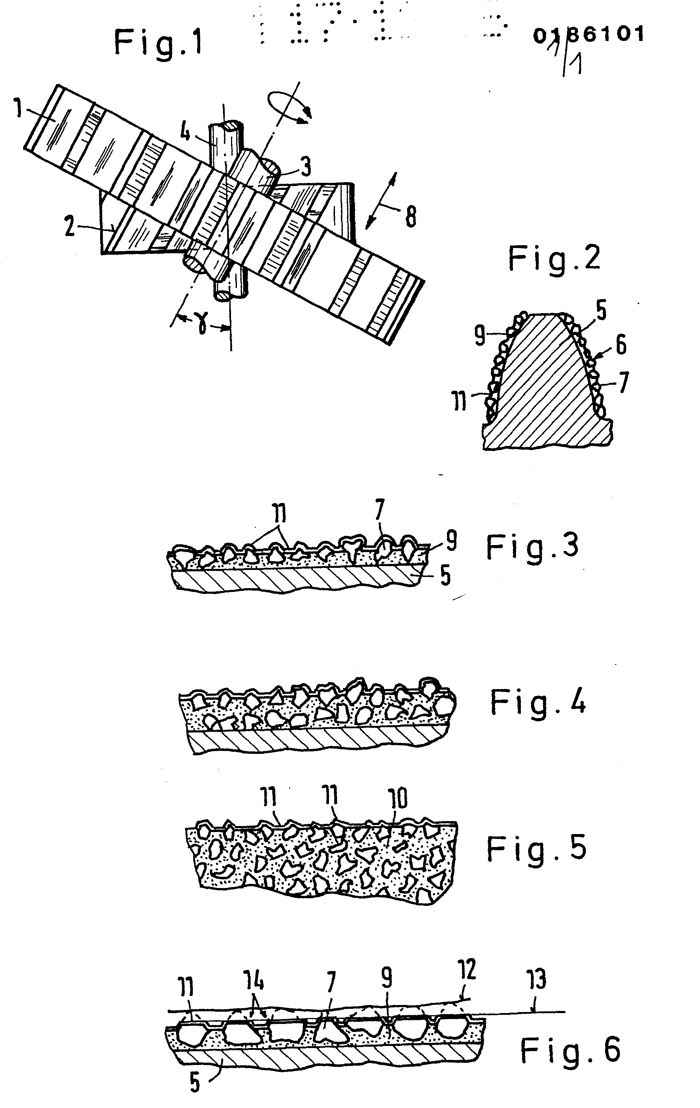

Figur 1 zeigt schematisch ein zahnradartiges Werkzeug 1, das zum Zwecke des spanenden Feinbearbeitens in die Verzahnung eines Stirnrades (Werkstück 2) eingreift und auf ihm abwälzt. Die Achsen der Werkzeugspindel 3 und der Werkstückspindel 4 kreuzen sich. Die Größe des Achskreuzwinkels $\varphi$ hängt von der speziellen Bearbeitungsaufgabe und davon ab, ob neben der zu bearbeitenden Verzahnung eine den Achskreuzwinkel begrenzende Schulter o. dgl. vorhanden ist. Das Beispiel zeigt ein geradverzahntes Werkzeug und ein schrägverzahntes Werkstück. Es ist auch jede andere Kombination möglich. Anstelle des zahnradartigen Werkzeugs 1 kann auch ein zahnstangenartiges oder schneckenförmiges Werkzeug Verwendung finden. Die Bearbeitung kann unter einem Längsvorschub des Werkzeugs relativ zum Werkstück beispielsweise in Richtung des Pfeiles 8 vor sich gehen. Ist das Werkzeug breit genug, so kann auf den Längsvorschub verzichtet werden. In diesem Falle ist der Wälzkörper konkav hyperboloidisch, d.h. mit in Längsrichtung hohlballigen Zahnflanken, ausgebildet. Für den Antrieb der Wälzbewegung ist normalerweise nur eines der beiden Elemente, z.B. das Werkzeug, angetrieben, während das andere Element über die Verzahnung mitgenommen wird. Die Maschine, auf der das Werkzeug 1 und das Werkstück 2 aufgenommen sind, braucht hier nicht dargestellt und beschrieben zu werden, da sie für die Erfindung ohne Bedeutung ist.

Figur 2 zeigt schematisch einen Schnitt durch einen Zahn des Werkzeugs 1. Der Zahn besteht aus einem metallischen Grundkörper 5, auf den eine Beschichtung 6 aus CBN-Körnern 7 und einem Bindemittel 9, z.B. Kunstharz, Bronze od. dgl. aufgebracht ist. Dabei können die CBN-Körner 7 in einer Schicht oder mehrschichtig angeordnet sein, wie das vergrößert in den Figuren 3 und 4 angedeutet ist. Die Körner 7 können auch völlig ungeordnet in einen Matrixwerkstoff 10 eingebettet sein (Figur 5), wenn das Werkzeug ganz aus diesem hergestellt ist oder wenn dieser auf einen nicht verzahnten metallischen Grundkörper aufgebracht ist.

In allen Fällen ist die von den CBN-Körnern 7 und dem Bindemittel 9 bzw. dem Matrixwerkstoff 10 gebildete Flankenfläche mit einem vor Verschleiß schützenden Überzug 11 versehen, der der Mikroform der Oberfläche entspricht.

Diese unregelmäßige Oberfläche 12 bildet keine geometrisch exakte Flankenform. Die Oberfläche kann der exakten (theoretischen) Flankenform 13 mehr angeglichen werden, wenn die aus dem Bindemittel 9 oder aus dem Matrixwerkstoff 10 herausragenden CBN-Körner 7 vor dem Aufbringen des Überzuges 11 mit einer Diamantschleifscheibe überschliffen oder mit einer Diamantpaste geläppt werden. Dabei entsteht, wie Figur 6 zeigt, eine Art "Tafelgebirge". Die im Bereich der Flankenfläche liegenden Kanten 14 der jetzt abgeflachten, aus dem Bindemittel 9 vorstehenden CBN-Körner 7 bilden die beim Feinbearbeiten des Werkstücks 2 wirksamen Schneidkanten, die mit dem schützenden Überzug 11 versehen sind.

Der als Verschleißschutzschicht wirkende Überzug 11 kann aus Titannitrid (TiN) bestehen. Er wird auf die Verzahnung des Werkzeugs 1 aufgedampft. Die dafür erforderlichen Temperaturen liegen in einem Bereich, der weder auf die CBN-Körner 7 noch auf das Bindemittel 9 oder den Matrixwerkstoff 10 nachteilige Auswirkungen hat.

## Schutzansprüche

1. Zahnrad-, zahnstangen- oder schneckenförmiges Werkzeug zum Feinbearbeiten der Zahnflanken von insbesondere gehärteten Zahnrädern, dessen Zähne eine abrasive, d.h. keine einheitlich gerichteten Schneidkanten aufweisende Oberfläche besitzen, wobei die Schneidkanten von den Kanten und/oder Ecken und/oder Spitzen von Körnern eines superharten Werkstoffes, insbesondere kubisch kristallinem Bornitrid (CBN) gebildet werden, gekennzeichnet durch eine zumindest auf den Zahnflanken vorhandene Verschleißschutzschicht.

2. Werkzeug nach Anspruch 1, dadurch gekennzeichnet, daß die Verschleißschutzschicht aus Titannitrid (TiN) besteht.

3. Werkzeug nach Anspruch 1 oder 2, dadurch gekennzeichnet, daß die Verschleißschutzschicht aufgedampft ist.

Fig.1

0186101

Fig.2

Fig.3

Fig.4

Fig.5

Fig.6

Europäisches
Patentamt

## EUROPÄISCHER RECHERCHENBERICHT

| | EINSCHLÄGIGE DOKUMENTE | | EP 85116089.5 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | <u>AT - B - 318 934</u> (D.E.A.G.)<br>* Gesamt *<br>-- | 1-3 | B 24 D 7/18<br>B 23 F 21/02 |
| A | <u>DE - A1 - 3 030 149</u> (MITSUBISHI)<br>* Patentansprüche 1,5 *<br>-- | 1-3 | |
| A | <u>DE - A - 2 158 727</u> (TELEDYNE)<br>* Patentansprüche 1-7 *<br>-- | 1-3 | |
| P,A | <u>DD - A1 - 224 249</u> (VEB)<br>* Patentansprüche 1,2 *<br>-- | 1-3 | |
| A | <u>EP - A1 - 0 041 266</u> (MAPAL)<br>* Gesamt *<br>---- | 1-3 | RECHERCHIERTE SACHGEBIETE (Int. Cl.4)<br><br>B 24 D 7/00<br>B 23 F 21/00<br>B 23 B 27/00 |

Der vorliegende Recherchenbericht wurde für alle Patentansprüche erstellt.

| Recherchenort | Abschlußdatum der Recherche | Prüfer |
|---|---|---|
| WIEN | 24-03-1986 | FUCHS |